# EUROPÄISCHE PATENTANMELDUNG

(11) **EP 2 161 465 A2**
(43) Veröffentlichungstag der Anmeldung: **10.03.2010**
(21) Anmeldenummer: 09169794.6
(22) Anmeldetag: 09.09.2009
(51) Int. Cl.: F16C 32/06, F16C 39/00, F16C 29/00, F16C 32/04

(54) **Aerostatische Lageranordnung mit zugeordneter elektrostatischer Vorspanneinheit, insbesondere für die Vakuumanwendung**

(30) Priorität: 09.09.2008 DE 102008046636
(71) Anmelder: Vistec Electron Beam GmbH, 07745 Jena (DE)
(72) Erfinder: Schubert, Gerhard, 07749, Jena (DE); Jackel, Christian, 06722, Droyßig (DE); Kirscstein, Ulf-Carsten, 07751, Jena (DE); Böhm, Michael, 07749, Jena (DE); Bauer, René, 07745, Jena (DE); Harnisch, Gerd, 07749, Jena (DE); Dr. Schenk, Christoph, 07747, Jena (DE); Dr. Risse, Stefan, 07749, Jena (DE); Dr. Peschel, Thomas, 07743, Jena (DE)
(74) Vertreter: Freitag, Joachim

(57) **Zusammenfassung**

Es wird eine aerostatische Lageranordnung zum Bewegen einer Vorrichtung auf einer Basisstruktur, insbesondere in einer Vakuumumgebung, mit mindestens einem aerostatischen Lagerelement, das einen Tragzonenbereich und einen Absaugbereich aufweisenden Lagerkörper umfasst, vorgeschlagen. Dem mindestens einen aerostatischen Lagerelement ist eine elektrostatische Vorspanneinheit mit mindestens einer Elektrode zugeordnet, an die eine Spannung anlegbar ist, derart, dass eine Kraftkomponente in Richtung der Flächennormalen des Lagerkörpers des aerostatischen Lagerelements erzeugt wird.

## Beschreibung

Die Erfindung betrifft eine aerostatische Lageranordnung, insbesondere für die Vakuumanwendung nach dem Oberbegriff des Hauptanspruchs.

Aerostatische Lagerelemente sind dem Stand der Technik folgend sehr gut geeignet, um Körper reibungsarm zu bewegen und zu führen. Ein aerostatisches Lagerelement ist beispielsweise in der US 7 207 720 beschrieben, wobei an einem Lagerkörper ein für Gas poröser Körper angeordnet ist, dem Gas unter Druck zugeführt wird. Es bildet sich im Lagerspalt zwischen benachbarten Lagerflächen ein tragfähiges Gaspolster aus. Um den richtigen Arbeitspunkt einzustellen und die Eigenschaften des aerostatischen Lagerelements gezielt beeinflussen zu können, ist es notwendig, das aerostatische Lagerelement z.B. mit einer Vorspannung zu versehen. Im Stand der Technik ist eine so genannte Vakuumvorspannung bekannt, bei der innerhalb der Gleitfläche des aerostatischen Lagerelements Zonen zur Beaufschlagung mit Unterdruck vorgesehen sind. Dazu wird der Lagerkörper mit Bohrungen oder Kanälen ausgeführt, die dann mit einer Unterdruckpumpe verbunden werden. Zwischen der mit Überdruck arbeitenden Gleitfläche des aerostatischen Lagerelements und der mit Unterdruck arbeitenden Vorspanneinheit bildet sich ein Gleichgewichtszustand aus, der die mechanischen Eigenschaften des aerostatischen Lagerelements positiv beeinflusst. Ein in der US 4 749 283 offenbartes aerostatisches Lagerelement ist für eine Vakuumumgebung geeignet, wobei dort die Gleitfläche oder Tragzone umgebende Absaugstufen für das an der Gleitfläche überschüssige Gas vorgesehen sind, damit das Gas nicht in die Vakuumumgebung eindringt. Weiterhin werden aerostatische Lagerelemente bei gasgeführten Tischen für die Elektronenstrahllithografie verwendet, wie beispielsweise in der EP 1 235 115 A2 offenbart.

Die für die Anwendung von aerostatischen Lagerelementen unter Normalatmosphäre oben ausgeführte Vakuumvorspannung ist unter Vakuumbedingungen nicht realisierbar. Häufig werden deshalb aerostatische Lagerelemente durch die Beaufschlagung mit Masse vorgespannt oder es werden gegenüberliegende Anordnungen von Lagerelemente gewählt, wobei die Vorspannung durch den Umgriff erfolgt.

Der Erfindung liegt die Aufgabe zugrunde, eine aerostatische Lageranordnung mit hoher Vorspannung vorzuschlagen, wobei keine zusätzliche Masse notwendig ist und die Vorspannung durch eine einfache Konstruktion zur Verfügung gestellt wird und insbesondere für die Elektronenstrahllithographie keine negative Beeinflussung des Elektronenstrahls stattfindet.

Diese Aufgabe wird erfindungsgemäß durch die kennzeichnenden Merkmale des Hauptanspruchs in Verbindung mit den Merkmalen des Oberbegriffs gelöst.

Durch die in den Unteransprüchen angegebenen Maßnahmen sind vorteilhafte Weiterbildungen und Verbesserungen möglich.

Dadurch, dass dem mindestens einen aerostatischen Lagerelement eine elektrostatische Vorspanneinheit mit mindestens einer Elektrode zugeordnet ist, derart, dass in Verbindung mit einer weiteren Elektrode, durch Anlegen einer elektrischen Spannung eine elektrostatische Kraftkomponente in Richtung der Flächennormalen des Lagerkörpers erzeugt wird, wird das aerostatische Lagerelement zu einem Gegenpart, z.B. eine Basisstruktur, vorgespannt, wobei keine zusätzliche bzw. geringe Masse hinzukommt und der Arbeitspunkt des aerostatischen Lagerelements mit der notwendigen Steifigkeit sauber eingestellt werden kann.

Die mindestens eine Elektrode ist an der oder in einem Vorspannkörper angeordnet, der Bestandteil der Vorspanneinheit ist und in vorteilhafter Weise kann die Elektrode auf dem Vorspannkörper als leitende Schicht abgeschieden oder durch Aufbau und Verbindungstechniken angeordnet werden. Auch kann der Vorspannkörper selbst die Elektrode sein. Ebenso kann die Elektrode als Schichtsystem von leitender und isolierender Schicht abgeschieden werden, wobei die dielektrische Schicht zur Isolation der Elektrode dient. Ein Dielektrikum zur Isolation kann auch durch Aufbau- und Verbindungstechniken auf die Elektrode aufgebracht werden.

Diese Elektrode wird zur Erzeugung einer elektrischen Feldkraft mit einem Hochspannungspotential von vorzugsweise kleiner 6000 V beaufschlagt.

Vorteilhafterweise bildet die Basisstruktur, die als Basisplatte ausgebildet sein kann, selbst eine zweite Elektrode, die vorzugsweise auf Massepotential liegt.
Zwischen beiden Elektroden kommt es zur Ausbildung eines elektrischen Feldes, ähnlich zum bekannten Prinzip des Plattenkondensators.

In einer besonders vorteilhaften Ausführungsform sind an oder in dem Vorspannkörper mindestens zwei Elektroden angeordnet, die örtlich und elektrisch getrennt sind und mit unterschiedlichen Potentialen beaufschlagbar sind. Die zwei Elektroden als Elektrodenpaar sind vorteilhafterweise nebeneinander angeordnet und sind gleichfalls mit einer Dielektrikumsschicht zur Isolation versehen. Es können auch mehrere Elektrodenpaare nebeneinander oder versetzt zueinander vorgesehen werden.

Die aerostatische Lageranordnung kann mehrere aerostatische Lagerelemente umfassen, denen jeweils eine Vorspanneinheit zugeordnet ist, die unmittelbar benachbart zum Lagerelement angeordnet ist. Eine vorteilhafte Ausführungsform wird durch eine zentrale Anordnung der Vorspanneinheit innerhalb mehrerer aerostatischer Lagerelemente realisiert, da dadurch ein kompakter Aufbau hergestellt wird.

Durch Vorsehen einer radialsymmetrischen Anordnung der Vorspanneinheit um ein aerostatisches Lagerelement herum wird eine momentfreie Vorspannung des Lagerelements realisiert.

Besonders vorteilhaft ist, dass das aerostatische Lagerelement oder die Absaugstruktur selbst ein Teil der Vorspanneinheit ist bzw. dass die Vorspanneinheit zumindest teilweise in den Absaugbereich des Lagerkörpers integriert ist, da dadurch die zusätzliche Masse minimiert wird.

In einer vorteilhaften Ausführungsform ist eine Steuer- und/oder Regeleinheit vorgesehen, die die zur Vorspannung erzeugte elektrostatische Kraftkomponente über die angelegte Spannung steuert und/oder regelt, wobei bei Vorspanneinheiten mit mehreren Elektroden oder mehreren Vorspanneinheiten die jeweilige angelegte Spannung und damit die elektrostatische Kraftkomponente individuell steuer- und/oder regelbar ist. Durch das Vorsehen dieser Steuer- und/oder Regeleinheit können die durch die Feldkräfte erzeugten berührungslos wirkenden Kraftkomponenten entsprechend den vorgegebenen Bedingungen schaltbar oder auch regelbar gemacht werden, wodurch eine optimale Anpassung vorgenommen werden kann. Gleichzeitig können Wechsellasten einfach und dynamisch ausgeglichen werden.
Ausführungsbeispiele der Erfindung sind in der Zeichnung dargestellt und werden in der nachfolgenden Beschreibung näher erläutert. Es zeigen
- Fig. 1: eine perspektivische Ansicht eines auf einer Basisstruktur verfahrbaren Tisches mit der erfindungsgemäßen aerostatischen Lageranordnung an einem ersten Ausführungsbeispiel,
- Fig. 2: eine Aufsicht auf die Lageranordnung nach Fig. 1 von unten,
- Fig. 3: eine schematische Schnittansicht durch eine Lageranordnung nach einem weiteren Ausführungsbeispiel,
- Fig. 4: eine erfindungsgemäße aerostatische Lageranordnung nach einem weiteren Ausführungsbeispiel von unten, und
- Fig. 5 und 6: zwei weitere Ausführungsbeispiele der erfindungsgemäßen Lageranordnung von unten.

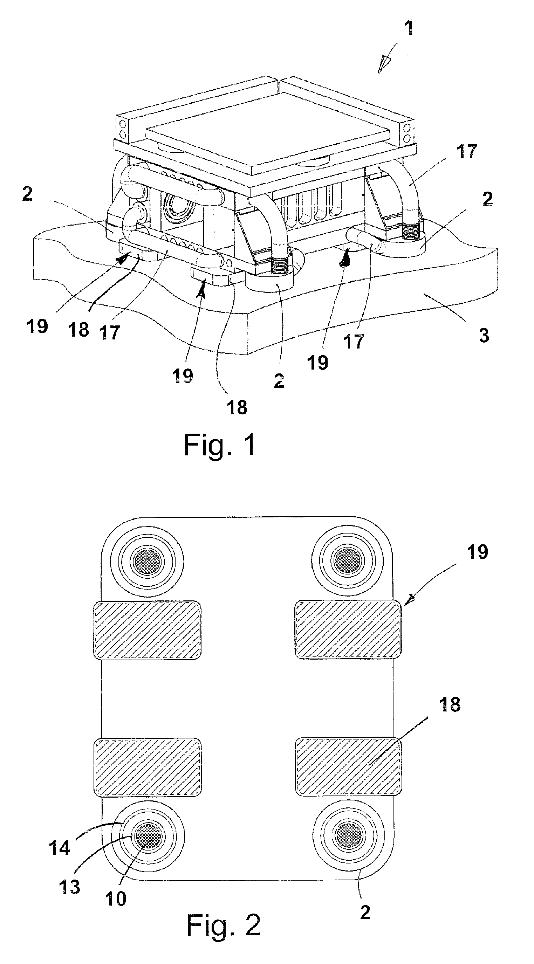

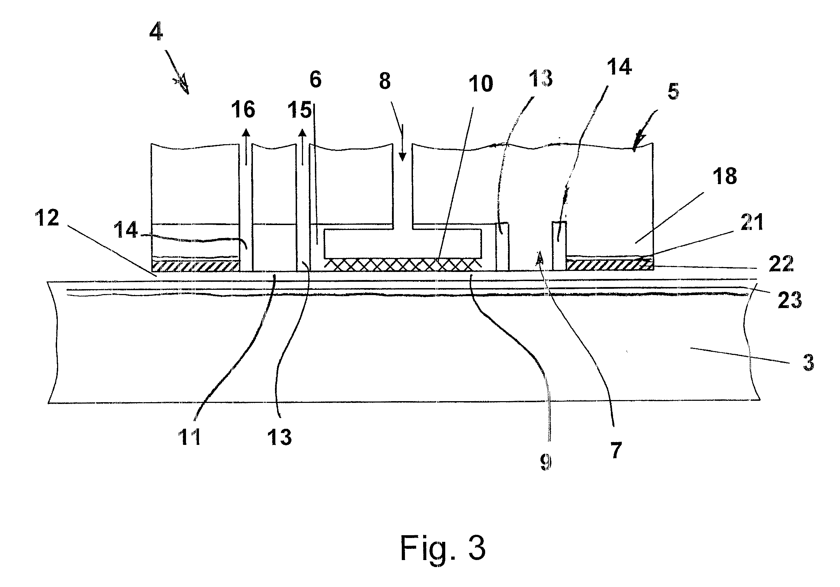

Der in Fig. 1 und Fig. 2 dargestellte Tisch 1 ist über aerostatische Lagerelemente 2, die Bestandteil einer Lageranordnung sind, auf einer Basisstruktur, die hier als Grundplatte 3 ausgebildet sein kann, bewegbar. Ein aerostatisches Lagerelement soll unter Bezugnahme auf Fig. 3, die schematisch den Aufbau des Lagerelements zeigt, beschrieben werden. Das Lagerelement, das hier mit 4 bezeichnet ist, umfasst einen Lagerkörper 5, der einen Tragzonenbereich 6 und einen Absaugbereich 7 umfasst. Der Tragzonenbereich 6, in dem sich der tragende Luft- oder Gasfilm ausbildet, ist mit einer Gaszuführung 8 verbunden, wobei über diese Zuführung unter Druck stehendes Gas zugeleitet wird, das über ein Verteilsystem 10 z.B. über ein poröses Material oder einzelne Düsen gedrosselt in einen Spalt 9 einströmt. Integriert in das aerostatische Lagerelement 4, den Tragzonenbereich 6 umgebend, sind jeweils ein erster Dichtspalt 11 und ein zweiter Dichtspalt 12 vorgesehen, wobei zwischen erstem Dichtspalt 11 und Tragenzonenbereich 6 ein erster Absaugkanal 13 und zwischen dem ersten und zweiten Dichtspalt 11, 12 ein zweiter Absaugkanal 14 angeordnet sind. Erster Dichtspalt 11 und Absaugkanal 13 bilden eine erste Absaugstufe für ein erstes Vakuum und der zweite Dichtspalt 12 und der Absaugkanal 14 bilden eine zweite Absaugstufe für ein zweites Vakuum. Aus den Absaugkanälen 13 und 14 wird das überschüssige Gas z.B. durch die Anbindung der Kanäle an Vakuumpumpen abgeführt, was durch die Pfeile 15 und 16 angedeutet ist.

Die aerostatischen Lagerelemente, die in der Fig. 1 verwendet werden, sind so ausgebildet, wie bisher in Zusammenhang mit Fig. 3 beschrieben wurde und in der Figur sind weiterhin Verbindungsrohre 17 für die Zufuhr des unter Druck stehenden Gases und die Absaugung von überschüssigem Gas dargestellt.

Der Tisch bzw. die Lageranordnung entsprechend den Fign. 1 und 2 weisen vier zu den Lagerelementen 2 benachbart angeordneten Vorspanneinheiten 19 auf, die jeweils einen Vorspannkörper 18 umfassen, wobei die Vorspanneinheit 19 nicht dargestellte Anschlüsse zum Anlegen einer Hochspannung umfasst. In dem Ausführungsbeispiel nach den Fign. 1 und 2 ist auf dem jeweilige Vorspannkörper 18 eine erste Elektrode ausgebildet, während die Basisplatte 3 die zweite Elektrode darstellt, die vorteilhafterweise auf Massepotential liegt. Über den Anschluss der Vorspanneinheit 19 wird an die erste Elektrode eine Hochspannung von bis zu 6000 V angelegt. Im Betrieb des Tisches bzw. der aerostatischen Lageranordnung wird über die Gaszuführung 8 (siehe Fig. 3) das unter Druck stehende Gas zugeführt, und es bildet sich in der Tragzone 6 ein tragfähiges Druckpolster aus. Zur Erzeugung der Vorspannung über die Masse des Tisches selbst hinaus wird an die Vorspanneinheiten 19 die Spannung angelegt, so dass die Vorspanneinheiten 19 bzw. die die Elektrode des Vorspannkörpers 18 und die Basisplatte wie ein Plattenkondensator arbeiten, wobei ein Abstand als Dielektrikum in Form eines Vakuumspaltes vorgesehen ist bzw. zusätzlich ein Festkörperdielektrikum angeordnet wird. Es werden somit die elektrostatischen Feldkräfte ausgenutzt, um eine Kraft in Richtung der Flächennormalen der aerostatischen Lagerelemente zu erzeugen.

Ein weiteres Ausführungsbeispiel der erfindungsgemäßen Lageranordnung wird im Zusammenhang mit Fig. 3 beschrieben, bei der die Vorspanneinheit in das aerostatische Lagerelement 4 bzw. in dessen Lagerkörper 5 integriert ist. Wie zu erkennen ist, ist an bzw. in dem den Tragzonenbereich 6 umgebenden Absaugbereich 7 eine erste Elektrode 21 angeordnet, auf der, dem Dichtspalt zugewandt, eine dielektrische Schicht 22 aufgebracht ist. In diesem Fall ist auch gezeigt, dass die Basisplatte 3 eine separate Elektrode 23 aufweist.

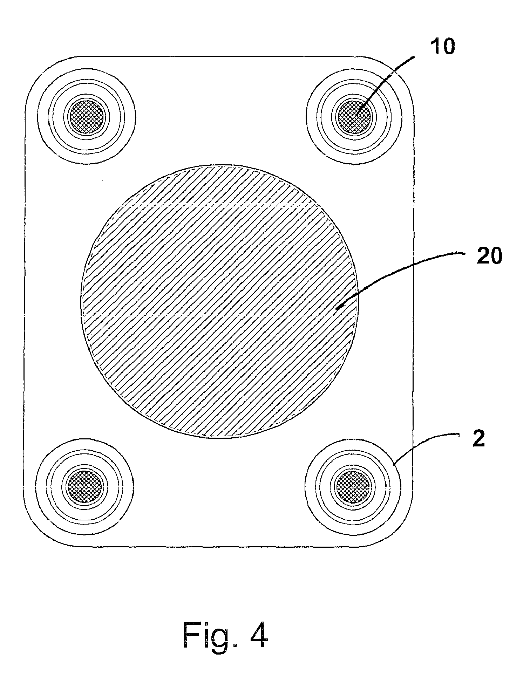

In Fig. 4 ist ein weiteres Ausführungsbeispiel einer erfindungsgemäßen aerostatischen Lageranordnung von unten dargestellt, wobei mittig eine Vorspanneinheit 20 und vier, diese Vorspanneinheit 20 umgebende aero- statische Lagerelemente 2 vorgesehen sind. Dies führt zu einer kompakten Anordnung. Ansonsten ist die Funktionsweise der Lageranordnung, wie im Zusammenhang mit den Fign. 1 bis 3 beschrieben.

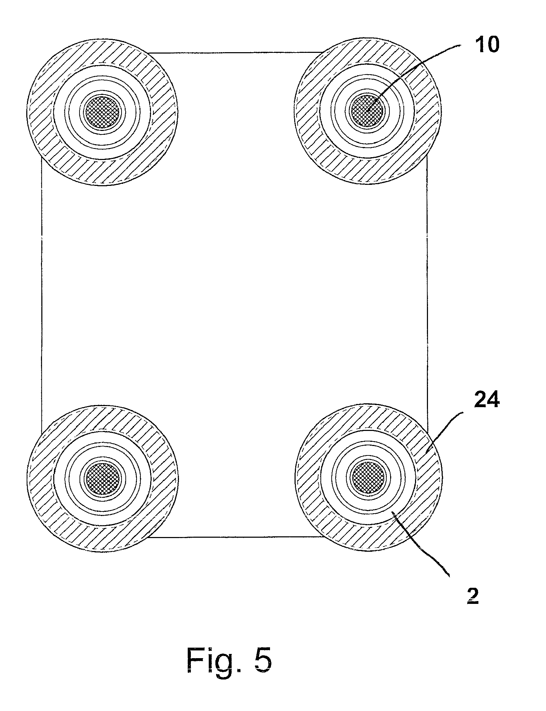

Eine ähnliche Anordnung wie in Fig. 3 ist in Fig. 5 von unten gezeigt, wobei die Vorspanneinheiten 24 ringförmig ausgebildet sind und jeweils ein Lagerelement 2 umgeben.

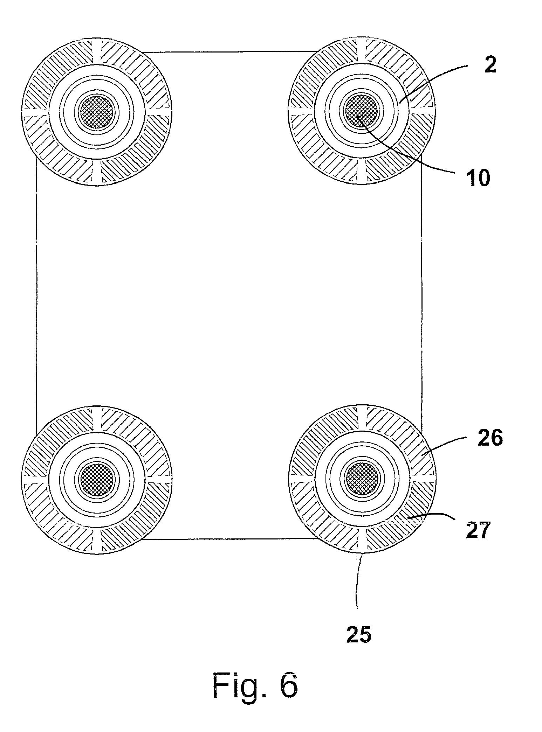

In dem Ausführungsbeispiel nach Fig. 6 sind in oder auf einen ringförmigen Vorspannkörper 25 der Vorspanneinheiten Paare von zwei Elektroden 26, 27 örtlich getrennt ein- oder aufgebracht und an diese Elektroden 26, 27 werden Spannungspotentiale angelegt, derart, dass eine positive und/oder negative Spannung zwischen den Elektroden aufgebracht wird. Es bilden sich somit Feldlinien, gegebenenfalls über die Basisplatte 3 aus, die eine Kraftkomponente in Richtung der Flächennormalen der aerostatischen Lagerelemente erzeugen.

## Patentansprüche

1. Aerostatische Lageranordnung, insbesondere für die Vakuumanwendung, mit mindestens einem aerostatischen Lagerelement, das einen Tragzonenbereich aufweisenden Lagerkörper umfasst, wobei innerhalb des Tragzonenbereichs Gasversorgungsöffnungen oder poröse Bereiche angeordnet sind, denen unter Druck stehendes Gas zur Erzeugung eines Gaspolsters zuführbar ist,
**dadurch gekennzeichnet,**
**dass** dem mindestens einen aerostatischen Lagerelement (2, 4) eine elektrostatische Vorspanneinheit (19) mit mindestens einer Elektrode (21) zugeordnet ist, an die eine Spannung anlegbar ist, derart, dass eine elektrostatische Kraftkomponente in Richtung der Flächennormalen des Lagerkörpers (5) des aerostatischen Lagerelements (2, 4) erzeugt wird.

2. Lageranordnung nach Anspruch 1, **dadurch gekennzeichnet, dass** die Vorspanneinheit (19) einen Vorspannkörper (18) umfasst, an den oder in dem die mindestens eine Elektrode (25) angeordnet ist oder der selbst die Elektrode bildet.

3. Lageranordnung nach Anspruch 1 oder Anspruch 2, **dadurch gekennzeichnet, dass** auf die Elektrode (21) mindestens eine Dielektrikumsschicht (22) aufgebracht ist.

4. Lageranordnung nach einem der Ansprüche 1 bis 3, die auf einer Basisstruktur angeordnet ist, **dadurch gekennzeichnet, dass** mindestens eine erste Elektrode an oder in dem Vorspannkörper (18) und die Basisstruktur (3) eine zweite Elektrode bildet oder die zweite Elektrode (23) an oder in der Basisstruktur angeordnet ist.

5. Lageranordnung nach einem der Ansprüche 1 bis 3, **dadurch gekennzeichnet, dass** an oder in dem Vorspannkörper (18) mindestens eine erste und eine zweite Elektrode angeordnet sind, die örtlich und elektrisch getrennt und mit unterschiedlichen Potentialen beaufschlagbar sind.

6. Lageranordnung nach einem der Ansprüche 1 bis 5, **dadurch gekennzeichnet, dass** das Lagerelement in der Mitte der Vorspanneinheit angeordnet ist.

7. Lageranordnung nach einem der Ansprüche 1 bis 6, **dadurch gekennzeichnet, dass** mehrere aerostatische Lagerelemente (2, 4) vorgesehen sind und jedem Lagerelement eine Vorspanneinheit (19) zugeordnet ist, die unmittelbar benachbart zum Lagerelement angeordnet ist.

8. Lageranordnung nach einem der Ansprüche 1 bis 5, **dadurch gekennzeichnet, dass** mehrere aerostatische Lagerelemente (2) eine Vorspanneinheit (20) umgeben.

9. Lageranordnung nach einem der Ansprüche 1 bis 6, **dadurch gekennzeichnet, dass** ein den Tragzonenbereich umgebender Absaugbereich (7) vorhanden ist und die Vorspanneinheit zumindest teilweise in dem Absaugbereich (7) des Lagerkörpers (5) integriert ist.

10. Lageranordnung nach einem der Ansprüche 1 bis 9, **dadurch gekennzeichnet, dass** eine Steuer- und/oder Regeleinheit vorgesehen ist, die die durch die Vorspanneinheit (19) erzeugte elektrostatische Kraftkomponente über die angelegte Spannung steuert und/oder regelt.

11. Lageranordnung nach Anspruch 10, **dadurch gekennzeichnet, dass** bei mehreren Vorspanneinheiten die angelegten Spannungen und mit ihnen die elektrostatischen Kraftkomponenten individuell regelbar sind.
